# EUROPEAN PATENT SPECIFICATION

(11) **EP 2 938 895 B1**
(45) Date of publication and mention of the grant of the patent: **14.11.2018**
(21) Application number: 13895056.3
(22) Date of filing: 22.11.2013
(51) Int. Cl.: F16C 33/04

(54) **IMPROVED FRICTION METERIALS AND METHODS OF PRODUCING SAME**
VERBESSERTE REIBUNGSMATERIALIEN UND VERFAHREN ZUR HERSTELLUNG DAVON
MATÉRIAUX DE FRICTION AMÉLIORÉS ET LEURS PROCÉDÉS DE PRODUCTION

(30) Priority: 04.10.2013 US 201314046410
(43) Date of publication of application: 04.11.2015
(73) Proprietor: Climax Engineered Materials, LLC, Phoenix, Arizona 85004 (US)
(72) Inventor: EPSHTEYN, Yakov, Sahuarita, Arizona 85629 (US); COX, Carl V., Sahuarita, Arizona 85629 (US); SHAW, Matthew C., Sahuarita, Arizona 85629 (US)
(74) Representative: Potter Clarkson LLP
(86) International application number: PCT/US2013/071493
(87) International publication number: WO 2015/050569

(56) References cited:
- EP-A1- 1 482 203
- WO-A2-2007/109817
- WO-A2-2012/148984
- US-A1- 2006 293 194
- US-A1- 2006 293 194
- US-A1- 2009 011 962
- US-A1- 2012 009 080
- US-B2- 6 759 372

## Description

### Technical Field

This invention relates to friction materials in general and more specifically to friction material compositions having improved performance.

### Background Art

Molybdenum disulfide (MoS₂) is usually recovered from molybdenite ore obtained from "primary" mine sites, although it can be recovered from secondary or by-product molybdenite obtained from "non-primary" mine sites as well. For example, secondary molybdenite may be obtained from copper mines, wherein the secondary molybdenite is typically combined with copper-containing materials (e.g., copper sulfide). In such cases, molybdenum disulfide concentrate is obtained as a by-product from copper sulfide-molybdenum disulfide separation processes.

Broadly speaking, molybdenite ore consists of silicified granite compositions having deposits of soft, black, and hexagonal MoS₂ crystalline structures widely dispersed therein (e.g., in an average concentration of only about 0.03 - 0.6% by weight of the entire ore body). One of the largest sources of MoS₂-containing ore (e.g., molybdenite) is the Henderson molybdenum mine near Empire, CO (US), currently operated by the Climax Molybdenum Company, although other mine sites throughout the world are able to produce large amounts of this material as well. The Henderson mine site is characterized as a "primary" mine and is capable of producing large amounts of molybdenite ore.

In a typical processing operation, the molybdenite ore is initially subjected to a physical grinding process in which the ore is reduced in size to a plurality of small particles (e.g., having a typical particle size of about 100 U.S. mesh or less). The ore particles are then further treated to remove the desired MoS₂ therefrom. This treatment step may be accomplished using a variety of techniques, including froth flotation extraction procedures that employ various hydrocarbon compositions and wetting agents known in the art for this purpose. As a result, the desired MoS₂ may be effectively separated from ore-based waste materials (i.e., "gangue"), such as silica, silicates, clays, and other unwanted materials. The desired MoS₂ compositions will, by virtue of their minimal weight and density levels compared with the gangue, be readily isolated in the flotation froth.

The resulting molybdenum disulfide concentrate (i.e., from either primary or secondary sources, as noted above) may be dried and sized (e.g., by grinding and subsequent classification steps) to produce a molybdenum disulfide powder product having the desired grade and particle size. Exemplary grades of molybdenum disulfide include "technical," "technical fine," and "superfine" grades, although other grades are known and commercially available. Technical grades of molybdenum disulfide typically comprise about 98% (by weight) molybdenum disulfide, with the balance comprising various amounts of iron, molybdenum trioxide, water, oil, and carbon, depending on a wide variety of factors.

Molybdenum disulfide powders of the type just described may be used in any of a wide variety of products and for a wide variety of purposes. For example, molybdenum disulfide powders are commonly used as lubricants, e.g., either in "dry" form or when combined with a variety of oils and greases. Molybdenum disulfide may also be used to form molybdenum disulfide coatings on any of a wide range of articles, typically to enhance the lubricity of such materials. Molybdenum disulfide powders may also be combined with various materials, such as metals, metal alloys, resins, and polymers, to enhance the properties thereof.

### Disclosure of Invention

A friction material composition is provided that comprises an abrasive, a filler, a binder, and a friction modifier comprising a spherical molybdenum disulfide powder. The spherical molybdenum disulfide powder comprises generally flake-shaped molybdenum disulfide sub-particles that are agglomerated together to form individual, substantially spherically-shaped particles whereby the spherical molybdenum disulfide powder comprises at least about 90% by weight molybdenum disulfide.

In an embodiment, a friction material composition includes an abrasive, a filler, a binder, and a spherical molybdenum disulfide powder made up of substantially spherically-shaped particles of molybdenum disulfide that are agglomerations of generally flake-shaped sub-particles of molybdenum disulfide whereby the spherical molybdenum disulfide powder includes at least about 90% by weight molybdenum disulfide.

Also disclosed is a method of making a friction material composition that includes: Providing respective supplies of an abrasive material, a filler material, and a binder material; providing a supply of a spherical molybdenum disulfide powder, the spherical molybdenum disulfide powder including agglomerations of generally flake-shaped sub-particles of molybdenum disulfide and at least about 90% by weight molybdenum disulfide; mixing together the abrasive material, the filler material, the binder material, and the spherical molybdenum disulfide powder to form a substantially homogeneous mixture; compacting the substantially homogeneous mixture to form a pre-formed article; and hot-pressing the pre-formed article to form the friction material composition.

### Brief Description of the Drawings

Illustrative and presently preferred embodiments of the invention are shown in the accompanying drawings in which:
Figure 1 is a scanning electron micrograph at 50x magnification of a molybdenum disulfide spherical powder produced from a Trial 9 embodiment;
Figure 2 is a scanning electron micrograph at 7500x magnification of a molybdenum disulfide spherical particle produced from a Trial 2 embodiment showing individual agglomerated sub-particles;
Figure 3 is a scanning electron micrograph at 500x magnification of a broken substantially solid molybdenum disulfide spherical particle from a Trial 8 embodiment;
Figure 4 is a scanning electron micrograph at 1000x magnification of a broken hollow molybdenum disulfide spherical particle from a Trial 6 embodiment;
Figure 5 is a process flow chart of basic process steps in one embodiment of a method for producing the molybdenum disulfide spherical powder product;
Figure 6 is a schematic representation of one embodiment of pulse combustion spray dry apparatus that may be used to produce the molybdenum disulfide spherical powder product;
Figure 7 is a scanning electron micrograph at 50x magnification of a molybdenum disulfide spherical powder produced from a Trial 5 embodiment;
Figure 8 is a scanning electron micrograph at 1000x magnification of a molybdenum disulfide spherical powder produced from a Trial 7 embodiment;
Figure 9 is a scanning electron micrograph at 1500x magnification of a molybdenum disulfide spherical powder produced from a Trial 4 embodiment;
Figure 10 is a scanning electron micrograph at 5000x magnification of molybdenum disulfide spherical particles produced from the Trial 5 embodiment showing individual agglomerated sub-particles; and
Figure 11 is a scanning electron micrograph at 100x magnification of a molybdenum disulfide spherical powder product produced from a Trial 1 embodiment.

### Best Mode for Carrying Out the Invention

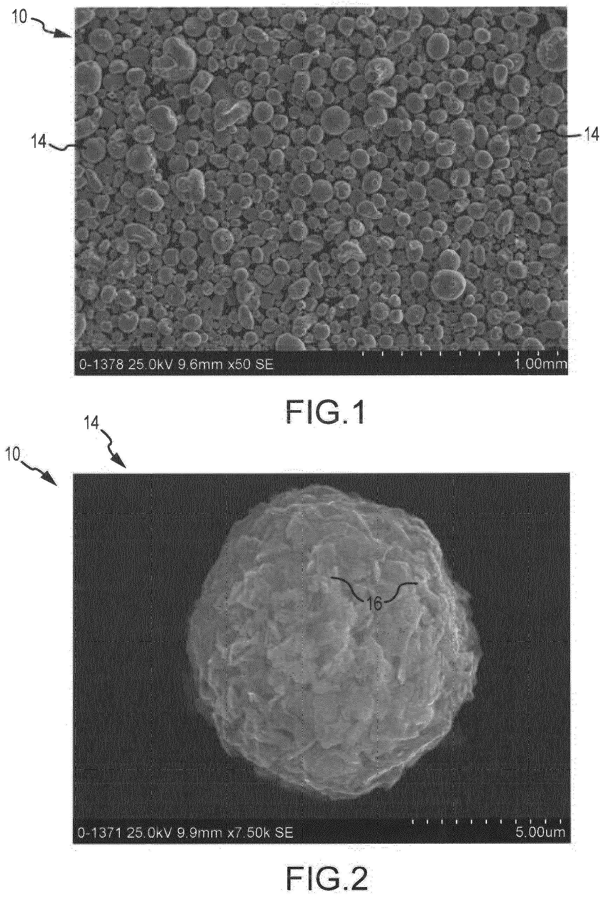

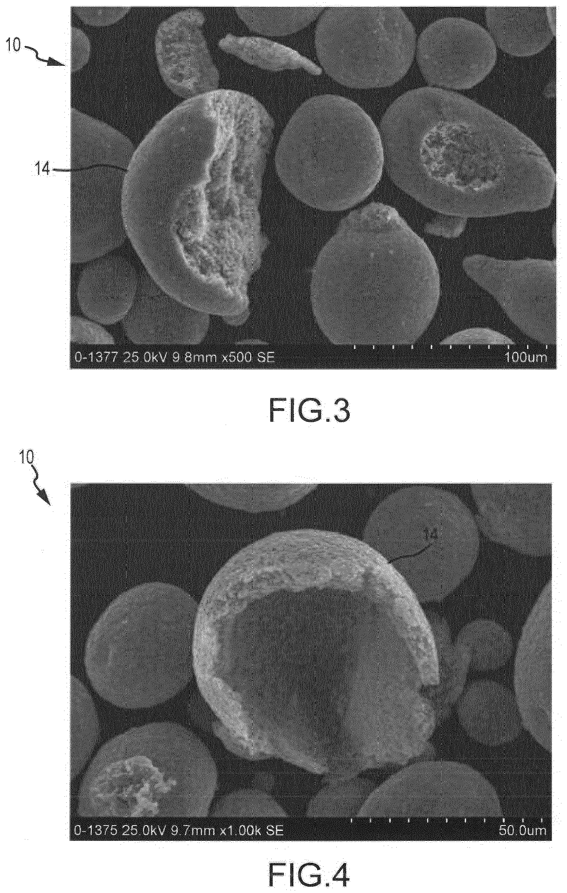

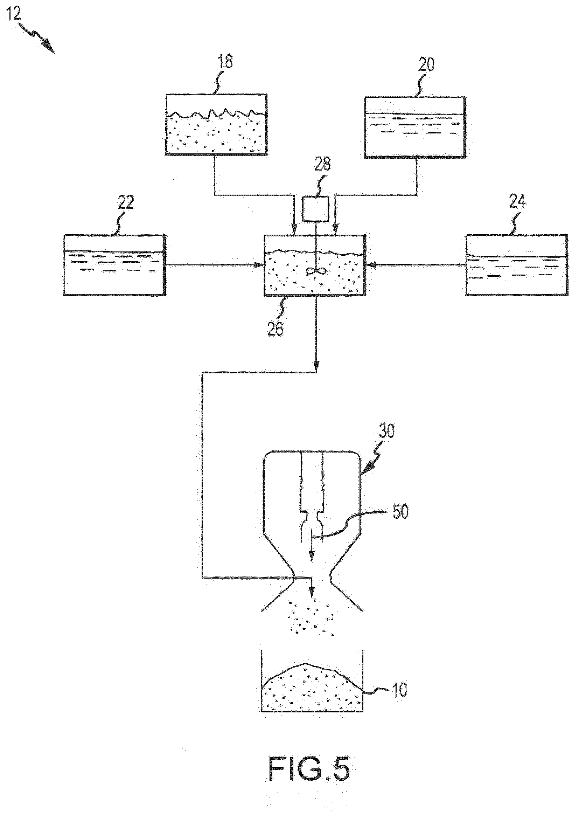

A molybdenum disulfide spherical powder product 10 useful in various embodiments of the present invention is pictured in Figures 1-4 and may be produced by a process 12 illustrated in Figure 5. Broadly speaking, the molybdenum disulfide spherical powder product 10 comprises a plurality of generally spherically-shaped particles 14 that are themselves agglomerations of smaller sub-particles 16, as best seen in Figure 2. The sub-particles 16 comprise flake-like or plate-like particles that are adhered or agglomerated together, thereby forming the generally spherically-shaped particles 14. Accordingly, while the spherically-shaped agglomerated particles 14 have generally smooth, highly-spherical outer surfaces (e.g., as shown in Figure 1), they nevertheless comprise lamellar-type structures (e.g., as shown in Figures 2 and 3). The molybdenum disulfide spherical powder product 10 used in the present invention thus may be characterized in the alternative as "spheres made of laminated flakes."

Many of the spherically-shaped agglomerated particles 14 comprising the spherical molybdenum disulfide powder 10 are substantially solid, i.e., non-hollow, as best seen in Figure 3. However, others of the spherical particles 14 may be shell-like or hollow in structure, as best seen in Figure 4. In addition, the generally spherically-shaped agglomerated particles 14 appear to have a thin film or coating thereon, as evidenced by the comparatively smooth, almost polished appearance of the particles 14 pictured in Figures 3, 4, 8, and 9. At the present time, it is believed that the thin film or coating on the particles 14 comprises residual amounts of binder 22 or dispersant 24 (or some combination thereof) that are brought to the surface of the particles 14 during the spray drying process. The thin surface film or coating may well provide the particles 14 with additional advantages and beneficial properties that are not associated with conventional molybdenum disulfide powders. For example, the thin film or coating may create a barrier that will prevent (or substantially reduce) various gases (e.g., oxygen) from reacting with the molybdenum disulfide comprising the particles 14. Such a barrier effect is particularly likely if the thin film or coating comprises the binder 22 or dispersant 24 materials (or some combination thereof).

As will be described in much greater detail herein, the molybdenum disulfide spherical powder products 10 produced in accordance with the teachings provided herein are generally quite flowable, unlike conventionally-produced molybdenum disulfide powders, which are not flowable. For example, exemplary spherical powder product embodiments 10 described herein exhibit Hall flowabilities from about 105 seconds for 50 grams of material (s/50g) to as low as (i.e., more flowable) about 73 s/50g.

In terms of density, the various embodiments of the molybdenum disulfide spherical powder product 10 exhibit densities comparable to conventionally-produced molybdenum disulfide powders of similar size. Moreover, the density of the powder products 10 produced in accordance with the teachings herein is highly uniform, with only small variations in powder densities being observed. For example, powder product embodiments described herein exhibited Scott densities in a range of about 0.9 g/cc to about 1 g/cc, tap densities in a range of about 1.1 g/cc to about 1.2 g/cc, and Hall densities in a range of about 0.9 g/cc to about 0.95 g/cc.

As mentioned earlier, the molybdenum disulfide spherical powder product 10 may be produced by the process or method 12 illustrated in Figure 5. Briefly described, process 12 may comprise providing a supply of a molybdenum disulfide (MoS₂) precursor material 18. The molybdenum disulfide precursor material 18 is combined with a liquid 20, such as water, as well as a binder 22, and a dispersant 24, to form a pulp or slurry 26. In one embodiment, the liquid 20, binder 22, and dispersant 24 are combined together before adding the molybdenum disulfide precursor material 18 to form the slurry 26, although the various ingredients may be combined in other sequences. The resulting slurry 26, i.e., comprising the molybdenum disulfide precursor material 18, liquid 20, binder 22, and dispersant 24, may then be mixed as necessary (e.g., by a mixer 28) so that the slurry 26 is well-mixed, i.e., substantially homogeneous. Thereafter, the slurry 26 may be fed into a spray dryer 30 in order to produce the molybdenum disulfide spherical powder product 10 (e.g., illustrated in Figures 1-4).

The molybdenum disulfide spherical powder product 10 used in the present invention exhibits several unique structural characteristics, morphologies, and properties that are not found in conventional molybdenum disulfide powders produced by conventional processes. For example, on a morphological basis, the spherically-shaped particles 14 comprising the molybdenum disulfide powder product are unknown in the art. In contrast, conventional molybdenum disulfide powders produced by conventional processes are characterized by individual particles that are flake-like or plate-like in nature.

Significantly, the spherical nature of the particles 14 of the powder product 10 used in the present invention provides the powders with high flowabilities, not only on an absolute scale (i.e., as measured by Hall flow), but also in comparison with conventional molybdenum disulfide powders, which are not flowable at all. The high flowability of the molybdenum disulfide powders used in the present invention makes them well-suited for use in various powder processes where flowability is important. Consequently, the flowable molybdenum disulfide powders used in the present invention may be used to advantage in any of a wide range of processes that are currently unavailable for use with conventional molybdenum disulfide powders due to their lack of flowability.

Still further, the molybdenum disulfide spherical powders 10 have densities that are comparable to densities associated with conventional molybdenum disulfide powders of comparable size. Moreover, the densities of the spherical powder product used in the present invention are also highly-uniform, with only small variations in density being observed among various powder lots.

The favorable flowabilities and densities associated with the molybdenum disulfide spherical powders used in the present invention allow the spherical powder product to be used to advantage in a wide range of applications, many of which are currently known, but others of which have yet to be developed, that can take advantage of the favorable density and flowability characteristics of the spherical powder product. For example, the high flowability of the molybdenum disulfide spherical powder product 10 allows it to be used to advantage in a wide variety of spray-type deposition processes to form surface coatings of molybdenum disulfide.

Having briefly described various embodiments and aspects of the present invention, as well as certain features and advantages thereof, various embodiments of the molybdenum disulfide spherical powder products 10, methods 12 for producing them, as well as various exemplary applications for the powders 10 will now be described in detail.

Referring now primarily to Figure 5, the molybdenum disulfide spherical powder product 10 may be prepared in accordance with a method or process 12. Process 12 may comprise providing a supply of molybdenum disulfide precursor material 18. The molybdenum disulfide precursor material 18 may comprise a molybdenum disulfide powder material having any of a wide range of particle sizes. Generally speaking, the molybdenum disulfide powders having particle sizes in a range of about 1 µm to about 30 µm work well and may be used in process 12. Suitable grades of molybdenum disulfide include "technical," "technical fine," and "superfine" grades.

Molybdenum disulfide powders suitable for use in the present invention (i.e., as the molybdenum disulfide precursor material 18) are commercially available from Climax Molybdenum Company, a Freeport-McMoRan Company, Ft. Madison Operations, Ft. Madison, Iowa (US). Alternatively, molybdenum disulfide powders available from other sources may be used as well. By way of example, in some embodiments, the molybdenum disulfide precursor material 18 comprises a technical fine grade of molybdenum disulfide powder commercially available from Climax Molybdenum Company. In other embodiments, the molybdenum disulfide precursor material 18 comprises a superfine grade of molybdenum disulfide powder, also available from Climax Molybdenum Company.

As briefly described above, the molybdenum disulfide precursor material 18 may be mixed with a liquid 20, a binder 22, and a dispersant 24 to form a pulp or slurry 26. In one embodiment, the liquid 20, binder 22, and dispersant 24 are combined together before the molybdenum disulfide precursor material 18 is added. Alternatively, the various ingredients comprising the slurry 26 may be combined in other sequences depending on a variety of factors, as would become apparent to persons having ordinary skill in the art after having become familiar with the teachings provided herein. Consequently, the present invention should not be regarded as limited to any particular sequence for combining the various ingredients of the slurry 26.

Liquid 20 serves as a carrier medium for the molybdenum disulfide precursor material 18, allowing it be atomized into fine droplets in the spray dryer 30. Generally speaking, liquid 20 may comprise water, although other liquids, such as alcohols, volatile liquids, organic liquids, and various mixtures thereof, may also be used, as would become apparent to persons having ordinary skill in the art after having become familiar with the teachings provided herein. Consequently, the present invention should not be regarded as limited to the particular liquids 20 described herein. However, by way of example, in the particular embodiments shown and described herein, the liquid 20 comprises deionized water.

Binder 22 assists in the agglomeration of the molybdenum disulfide sub-particles 16 to form the generally spherically-shaped particles 14 comprising the molybdenum disulfide spherical powder product 10. Binder 22 may therefore comprise any of a wide range of materials that are now known in the art or that may be developed in the future that would be suitable for this purpose. By way of example, in the particular embodiments shown and described herein, binder 22 comprises polyvinyl alcohol (PVA).

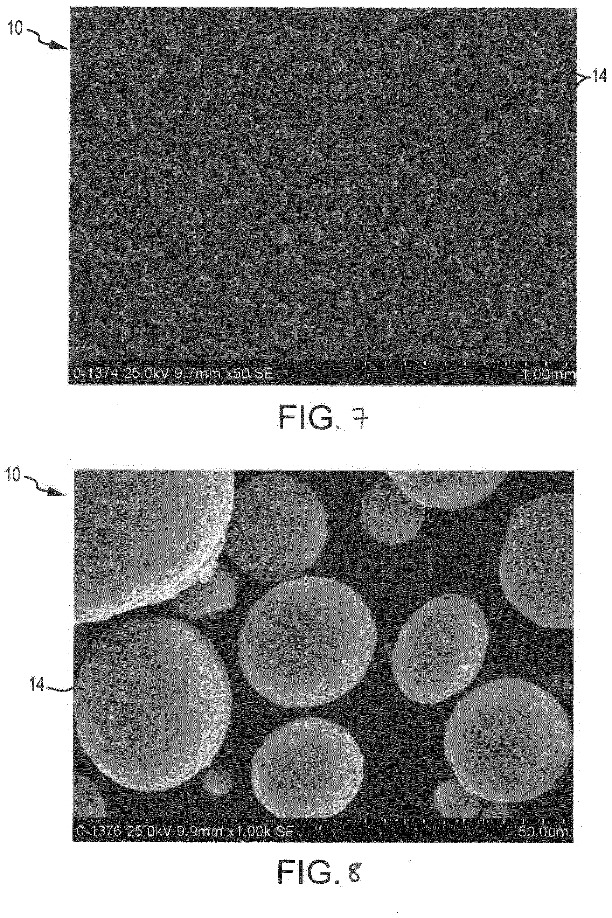

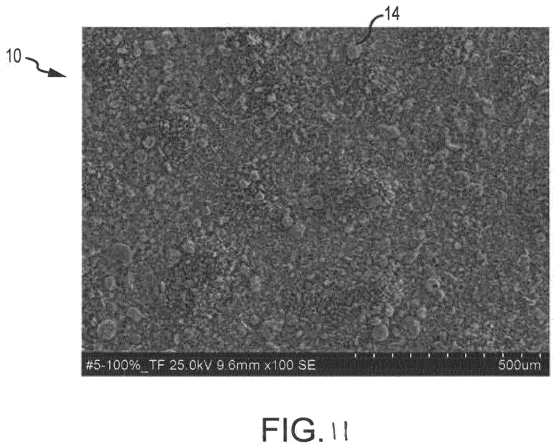

Dispersant 24 assists in producing a substantially foam-free or foamless slurry 26, in which the molybdenum disulfide precursor material 18 is substantially evenly dispersed within the liquid 20, as opposed to being suspended in a foam layer on the surface of slurry 26. The ability to form a foamless slurry 26, i.e., in which the molybdenum disulfide precursor material 18 is substantially evenly dispersed therein, but without significant foaming, is believed to substantially increase the number and sphericity of the agglomerated particles 14 comprising the powder product 10. For example, and as will be described in greater detail below in the Examples, slurry composition number 1 (i.e., Slurry 1), which lacked a dispersant 24, contained a significant amount of foam. The molybdenum disulfide powder product made from Slurry 1 (i.e., from Trial 1) and shown in Figure 11, contained substantially fewer agglomerated particles 14 compared to the powder products 10 made from dispersant-containing slurries 26 (i.e., Slurries 2-4) shown in Figures 1 and 7. Moreover, those agglomerated particles 14 that were formed from Slurry 1 were generally less spherical than those produced from slurries containing dispersant 24, again, as best seen by comparing the powders of Figures 1 and 7 (made from slurries 26 containing a dispersant 24) with the powder of Figure 11 (made from a slurry 26 lacking a dispersant 24). Surprisingly and unexpectedly, the addition of a dispersant 24 is critical in achieving many of the objects and advantages of the present invention.

In accordance with the foregoing considerations, then, dispersant 24 may comprise any of a wide range of dispersants now known in the art or that may be developed in the future that are, or would be, suitable for dispersing the molybdenum disulfide precursor material 18 throughout the slurry 26, thereby enhancing the production of generally spherically-shaped agglomerated particles 16 during the spray drying process. Example dispersants 24 suitable for use in the present invention include, but are not limited to various types of detergents, such as alcohol ethoxylates and alcohol alkoxylates. By way of example, in the particular embodiments shown and described herein, dispersant 24 comprises p-tert-octylphenol ethoxylate (a nonionic alcohol ethoxylate detergent, CAS# 9002-93-1), which is currently commercially available from the Dow Chemical Company and other vendors under the registered trademark "Triton X-100."

Also in accordance with the foregoing considerations, it may be possible in other embodiments to substitute a defoaming agent for the dispersant 24. The use of a defoaming agent will assist in the removal of any foam created during the slurry formation process, thus aiding in the re-dispersion of the molybdenum disulfide precursor material 18 in slurry 26. Defoaming agents suitable for use with the present invention may include any of a wide range of water-based and ethylene oxide/propylene oxide (EO/PO)-based agents.

As described above, it is generally preferable to combine the liquid 20, binder 22, and dispersant 24 before adding the molybdenum disulfide precursor material 18. Combining the ingredients in this order generally allows the binder 22 and the dispersant 24 to be completely dissolved and/or dispersed within liquid 20 before the molybdenum disulfide precursor material 18 is added, thereby enhancing the homogeneity of the resulting slurry 26. In addition, this combination sequence would be well-suited for situations wherein the particular binder 22 and/or dispersant 24 to be used are provided in powder, as opposed to liquid, form. Alternatively, of course, other combination sequences are possible depending on the particular materials to be used, the particular mixing apparatus involved, and other factors, as would become apparent to persons having ordinary skill in the art after having become familiar with the teachings provided herein. Consequently, the present invention should not be regarded as limited to any particular combination sequence for the constituents of slurry 26.

The molybdenum disulfide precursor material 18 should be added to the liquid mixture (e.g., comprising liquid 20, binder 22, and dispersant 24) in an amount sufficient to result in a slurry 26 having a "solids loading" (i.e., the weight percent of solids in the slurry 26) in a range of about 50% by weight to about 60% by weight solids (e.g., primarily as molybdenum disulfide, although the binder 22 and dispersant 24 may involve some solid constituents as well). Preferable solids loadings may be in a range of about 52-58% by weight solids, while more preferable solids loadings may be in a range of about 52-56% by weight solids. Generally speaking, slurries 26 comprising solids loadings greater than about 60% by weight may create difficulties in pumping the slurry 26 into the spray dryer 30. Slurries 26 having solids loadings in excess of about 60% by weight may also result in frequent clogging of the nozzle 70 (Figure 4) of spray dryer 30 and may create other problems. On the other hand, solids loadings less than about 50% by weight will generally result in production inefficiencies, e.g., increased time and/or energy requirements to produce a given quantity of the molybdenum disulfide powder product 10.

After being prepared, slurry 26 may be spray dried (e.g., in spray dryer 30) to produce the molybdenum disulfide spherical powder product 10. By way of example, in one embodiment, spray dryer 30 may comprise a pulse combustion spray dryer of the type shown and described in U.S. Patent No. 7,470,307, of Larink, Jr., entitled "Metal Powders and Methods for Producing the Same."

Briefly described, the spray dry process involves feeding slurry 26 into the pulse combustion spray dryer 30. In the spray dryer 30, slurry 26 impinges a stream of hot gas (or gases) 50, which is pulsed at or near sonic speeds. The sonic pulses of hot gas 50 contact the slurry 26 and drive-off substantially all of the liquid component (e.g., liquid 20, binder 22, and dispersant 24), resulting in the formation of the spherical powder product 10.

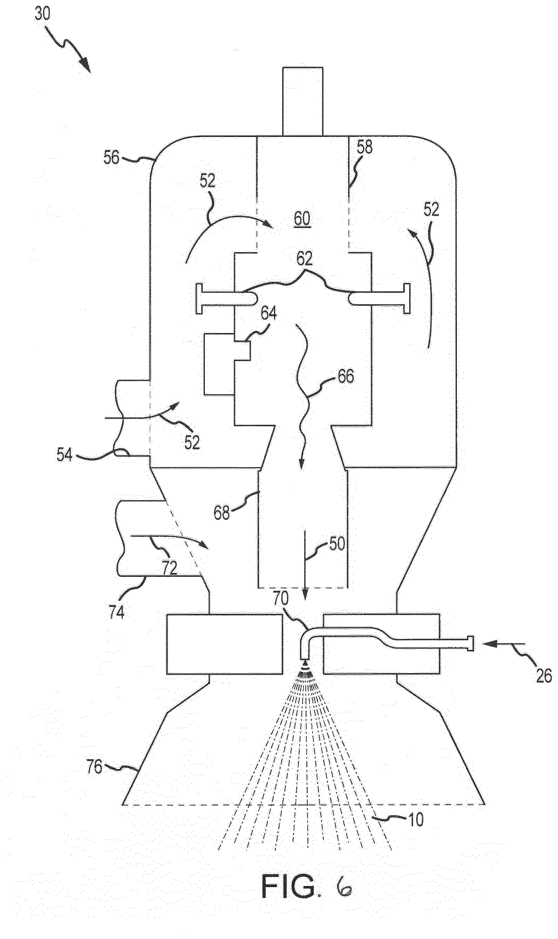

More specifically, and with reference now primarily to Figure 6, combustion air 52 may be fed (e.g., pumped) through an inlet 54 of spray dryer 30 into the outer shell 56 at low pressure, whereupon it flows through a unidirectional air valve 58. The combustion air 52 then enters a tuned combustion chamber 60 where fuel is added via fuel valves or ports 62. The fuel-air mixture is then ignited by a pilot 64 to create a pulsating stream of hot combustion gases 66. The hot combustion gases 66 may be pressurized to a variety of pressures, e.g., in a range of about 0.003 MPa (about 0.5 psi) to about 0.2 MPa (about 3 psi) above the combustion fan pressure. The pulsating stream of hot combustion gases 66 rushes down tailpipe 68 toward the atomizer or nozzle 70. Just above the nozzle 70, quench air 72 may be fed through an inlet 74 and may be blended with the hot combustion gases 66 in order to attain the pulsating stream of hot gases 50 having the desired temperature. By way of example, the temperature of the pulsating stream of hot gas 50 may be in a range of about 300°C to about 800°C (570°F to about 1470°F), such as about 490°C to about 600°C (910°F to about 1110°F), and more preferably about 545°C (1013°F).

The slurry 26 is introduced into the pulsating stream of hot gases 50 via the atomizer or nozzle 70. The atomized slurry may then disperse and begin to dry in the conical outlet 76 and thereafter enter a tall-form drying chamber (not shown). Further downstream, the spherical powder product 10 may be recovered using standard powder collection equipment, such as cyclones and/or baghouses (also not shown).

In pulsed operation, the air valve 58 is cycled open and closed to alternately let air into the combustion chamber 60 for the combustion thereof. In such cycling, the air valve 58 may be reopened for a subsequent pulse just after the previous combustion episode. The reopening of air valve 58 allows a subsequent air charge (e.g., combustion air 52) to enter. The fuel valve 62 re-admits fuel, and the mixture auto-ignites in the combustion chamber 60, as described above. This cycle of opening and closing the air valve 58 and burning (i.e., combusting) the fuel in the chamber 60 in a pulsing fashion may be controllable at various frequencies, e.g., from about 80 Hz to about 110 Hz, although other frequencies may also be used.

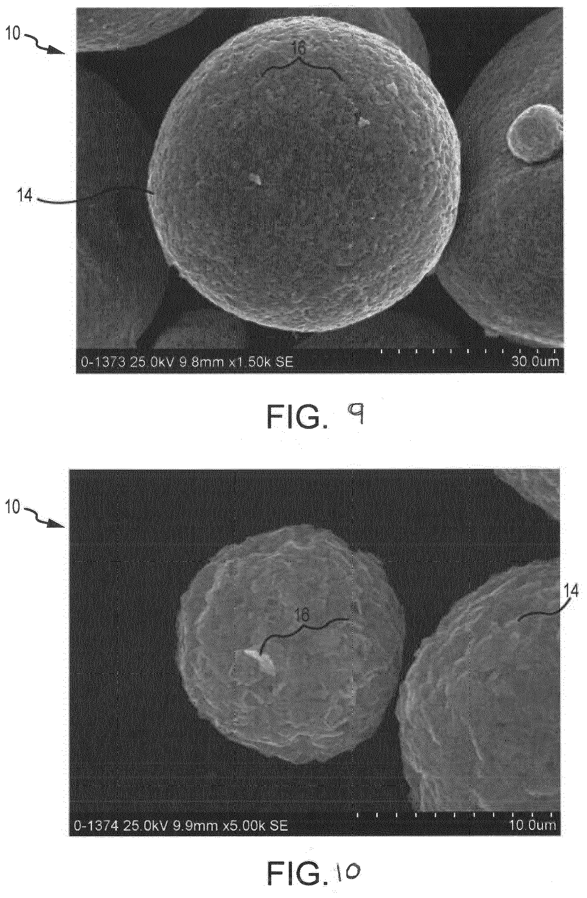

The "green" or as-produced molybdenum disulfide spherical powder product 10 produced by the pulse combustion spray dryer 30 described herein is shown in Figures 1-4 and 7-11 and comprises a plurality of generally spherically-shaped particles 14 that are themselves agglomerations of smaller sub-particles 16. See, for example, Figures 1, 8, and 9. The smaller sub-particles 16 comprise flake-like or plate-like particles that are adhered together, so that the overall spherical particles 14 comprise a lamellar type structure (i.e., a composite powder comprising "spheres made of laminated flakes"). See, for example, Figures 2 and 10. Many of the agglomerated spherical particles 14 comprising the molybdenum disulfide powder product 10 are substantially solid, i.e., non-hollow, as best seen in Figure 3, while others are shell-like or hollow in structure, as best seen in Figure 4.

As was briefly described above, the generally spherically-shaped agglomerated particles 14 appear to have a thin film or coating thereon, as evidenced by the comparatively smooth, almost polished appearance of the particles 14. See, for example, the particles 14 pictured in Figures 3, 4, 8, and 9. It is believed that the thin film or coating on the particles 14 comprises residual amounts of binder 22, dispersant 24, or some combination thereof, that are brought to the surface of the particles 14 during the spray drying process.

The thin surface film or coating may well provide the particles 14 with additional advantages and beneficial properties that are not associated with conventional molybdenum disulfide powders. For example, if the particular composition of the thin film or coating (e.g., the material used as binder 22 and/or dispersant 24) is impervious to certain materials, then it is expected that the thin film or coating on the particles 14 would be impervious to those materials as well. In the particular example powder products 10 described herein (i.e., made with PVA as the binder material 22), it is expected that the thin films on the particles 14 will be impervious to the same materials (such as oxygen) as PVA. Therefore, particles 14 produced in accordance with the teachings provided herein will likely exhibit reduced levels of oxidization compared with conventional molybdenum disulfide particles produced by conventional processes. The thin film or surface coatings on the particles 14 may therefor be customized or engineered to provide the particles 14 with certain attributes or properties by providing the appropriate materials during the mixing or slurring process.

Generally speaking, the molybdenum disulfide spherical powder product 10 produced in accordance with the teachings provided herein will comprise a wide range of sizes, and particles having sizes ranging from about 1 µm to about 500 µm, such as, for example, sizes ranging from about 1 µm to about 100 µm, can be readily produced by following the teachings provided herein. Sieve analyses of various "as-produced," i.e., green molybdenum disulfide spherical powder products 10 are provided in Tables V and VI. The molybdenum disulfide spherical powder product 10 may be classified if desired, to provide a product 10 in a desired size range.

A significant difference between the molybdenum disulfide spherical powder product 10 used in the present invention and conventional molybdenum disulfide powders relates to the flowability of the powder product 10. More particularly, the molybdenum disulfide spherical powder product 10 used in the present invention is generally quite flowable, whereas conventional molybdenum disulfide powders are not. Exemplary powder products 10 display Hall flowabilities in the range of about 105 s/50g (slower flow) to about 80 s/50g (faster flow). In some exemplary embodiments, Hall flowabilities may be as low (i.e., more flowable) as 73.8 s/50g. In some cases, the flowability of the as-produced molybdenum disulfide spherical powder product 10 may be enhanced (i.e., increased) by screening or classification, particularly if the as-produced product contains larger agglomerations.

The density of the molybdenum disulfide spherical powder product 10 is comparable to other molybdenum disulfide powders of similar size and produced by conventional processes. Moreover, the density of the powder products 10 produced in accordance with the teachings herein is fairly consistent, with only small variations in powder densities being observed among the various powder lots. Exemplary molybdenum disulfide powder products 16 have Scott densities in a range of about 0.9 g/cc to about 1 g/cc, tap densities in a range of about 1.1 to about 1.2 g/cc, and Hall densities in a range of about 0.9 g/cc to about 0.95 g/cc, as set forth in Table IV.

As mentioned above, the pulse combustion spray dryer 30 provides a pulsating stream of hot gases 50 into which is fed the slurry 26. The contact zone and contact time are very short, the time of contact often being on the order of a fraction of a microsecond. Thus, the physical interactions of hot gases 50, sonic waves, and slurry 26 produces the molybdenum disulfide spherical powder product 10. More specifically, the liquid 20 component of slurry 26 is substantially removed or driven away by the sonic (or near sonic) pulse waves of hot gas 50. The short contact time also ensures that the slurry components are minimally heated, e.g., to levels on the order of about 115°C at the end of the contact time, temperatures which are sufficient to evaporate the liquid component of slurry 26.

However, in certain instances, residual amounts of liquid (e.g., liquid 20, binder 22 and/or dispersant 24) may remain in the resulting green molybdenum disulfide spherical powder product 10. Any remaining liquid may be driven-off (e.g., partially or entirely), by a subsequent heating process . Generally speaking, the heating process should be conducted at moderate temperatures. Heating may be conducted at temperatures within a range of about 90°C to about 120°C (about 110°C preferred). Alternatively, temperatures as high as 800°C may be used for short periods of time. In many cases, it may be preferable to conduct the heating in a hydrogen atmosphere in order to minimize oxidation of the molybdenum disulfide spherical powder product 10.

It may also be noted that the agglomerations of the molybdenum disulfide spherical powder product 10 retain their shapes (i.e., substantially spherical), even after the heating step . In fact, heating may, in certain embodiments, result in an increase in flowability of the molybdenum disulfide spherical powder product 10.

In some instances a variety of sizes of agglomerated particles 14 comprising the molybdenum disulfide spherical powder product 10 may be produced during the spray drying process. It may be desirable to further separate or classify the as-produced molybdenum disulfide spherical powder product 10 into a powder product having a size range within a desired product size range. For example, most of the molybdenum disulfide spherical powder product 10 produced will comprise particle sizes in a wide range (e.g., from about 1 µm to about 500 µm), with substantial amounts (e.g., in a range of 40-50 wt.%) of product being smaller than about 53 µm (i.e., -270 U.S. mesh).

The process 12 described herein may yield a substantial percentage of molybdenum disulfide spherical powder product 10 in this size range. However, there may be remainder products, particularly the smaller products, outside the desired product size range which may be recycled through the system, though liquid (e.g., water) would again have to be added to create an appropriate slurry composition. Such recycling is an optional alternative (or additional) step or steps.

The desirability and/or necessity to first classify the molybdenum disulfide spherical powder product 10 will also depend on the particular particle sizes of the green or "as-produced" spherical powder product 10 made by the process 12 of Figure 5. That is, depending on the particular process parameters that are used to produce the green spherical powder product 10 (exemplary embodiments of which are described herein), it may be possible or even advantageous to use the spherical powder product 10 in its green or as-produced form. Alternatively, of course, other considerations may indicate the desirability of first classifying the green spherical powder product 10.

In summation, then, because the desirability and/or necessity of classifying the green or as-produced molybdenum disulfide powder product 10 will depend on a wide variety of factors and considerations, some of which are described herein and others of which will become apparent to persons having ordinary skill in the art after having become familiar with the teachings provided herein, the present invention should not be regarded as requiring a classification step 34 or to a green molybdenum disulfide powder product 10 having any particular particle size distribution.

### EXAMPLES

Four different slurry compositions or mixtures, referred to herein as Slurries 1-4, were prepared in accordance with the teachings provided herein. The four slurries were then spray dried in nine (9) separate spray dry trials (designated herein as Trials 1-9), to produce nine (9) different powder preparations or embodiments. The first slurry composition, i.e., Slurry 1, was used in the first spray dry trial (i.e., Trial 1), with the second, third and fourth slurry compositions (i.e., Slurries 2-4) being used in Trials 2-4, 5-7, and 8-9, respectively, as indicated in Tables II and III.

As described above, the first slurry mixture (i.e., Slurry 1) did not utilize a dispersant 24. As a consequence, the Slurry 1 composition contained substantial quantities of foam. Moreover, the powder product resulting therefrom (i.e., the Trial 1 product shown in Figure 11) did not exhibit a high yield of agglomerated particles (i.e., particles 14). To the contrary, most of the particles produced from the Slurry 1 composition were generally flake-like in nature, as best seen in Figure 11. The flake-like particles of the Trial 1 powder product appear to be highly similar to particles associated with conventional molybdenum disulfide powders produced by conventional processes. Still further, those agglomerated particles that were produced from Slurry 1 (i.e., via Trial 1) were generally aspherical in nature, again as best seen in Figure 11.

In contrast to Slurry 1, Slurries 2-4 all utilized a dispersant 24. Significantly, each of Slurries 2-4 was substantially foam-free. Moreover, the powder products 10 made from Slurries 2-4 (i.e., via Trials 2-9) exhibited high yields of highly-spherical agglomerated particles 14, as best seen in Figures 1 and 7. It is believed that the addition of the dispersant 24 causes a much higher quantity of the molybdenum disulfide precursor material 18 to be suspended in the liquid components of the slurry 26 than is the case where a dispersant 24 is not present. Consequently, a greater percentage of the molybdenum disulfide precursor material 18 will be suspended and/or dispersed in the droplets of the slurry 26 formed during the spray drying process.

The various powder preparations, i.e., spherical powder products 10, made from the dispersant-containing slurries (i.e., Slurries 2-4, corresponding to Trials 2-9) were then analyzed, the results of which are presented in Tables IV-VIII. However, the spherical powder product made from the Slurry 1 composition (without the dispersant 24), was not analyzed.

With reference now primarily to Table I, the various slurries 26 (i.e., Slurries 1-4) were prepared in the manner described herein. More specifically, each slurry composition was prepared by mixing the liquid 20, binder 22, and (for Slurries 2-4) dispersant 24. For each slurry composition, the liquid 20 was first combined with the binder 22 and dispersant 24 (for Slurries 2-4) before the molybdenum disulfide precursor material 18 was added. The various constituents were then mixed together or blended (e.g., by a suitable mixer 28) in order to form a well-mixed (i.e., substantially homogeneous) slurry 26. As noted herein, the mixing process resulted in the formation of a significant amount of foam in the Slurry 1 composition. However, Slurries 2-4 did not result in the formation of significant amounts of foam due to the presence of the dispersant 24.

The four slurry compositions (i.e., Slurries 1-4) were similar in composition, except that Slurry 1 did not involve a dispersant 24, as noted. More specifically, the Slurry 1 composition comprised 42.27% by weight liquid 20 (e.g., as deionized water), 1.98% by weight binder 22 (e.g., as polyvinyl alcohol), with the balance, i.e., 55.75% by weight, being the molybdenum disulfide precursor material 18. The molybdenum disulfide precursor material 18 used in the Slurry 1 composition comprised the "technical fine" grade of molybdenum disulfide and was obtained from the Climax Molybdenum Company, as specified herein.

The calculated solids loading of the Slurry 1 composition was 55.75% by weight. As used herein, the term "calculated solids loading" refers to the solids content of the slurry 26 based on the relative weights of precursor material 18 and liquids (e.g., 20, 22, and 24) that were combined to form the slurry 26. However, the actual (i.e., measured) solids loading for the Slurry 1 composition was 55.93% by weight, as set forth in Table I. The reasons for the variation between the calculated and actual solids loadings of the Slurry 1 composition are thought to be due primarily to presence of some solids in the other liquid components (e.g., binder 22), from weighing (i.e., measurement) errors, and possibly from inhomogeneities in the slurry mixture (e.g., due to the presence of significant amounts of foam in the Slurry 1 composition).

The second, third, and fourth slurry compositions 26 (i.e., Slurries 2-4), were substantially identical to one another, with each slurry composition 26 comprising 38.7% by weight liquid 20 (e.g., as deionized water), 6.2% by weight binder 22 (e.g., as polyvinyl alcohol), 1% by weight dispersant 24 (e.g., as Triton X-100), with the remainder comprising the molybdenum disulfide precursor material 18. Thus, and unlike the Slurry 1 composition, each of Slurries 2-4 involved the addition of a dispersant 24. Also, the molybdenum disulfide precursor material 18 used for Slurries 2-4 comprised the "superfine" grade of molybdenum disulfide from the Climax Molybdenum Company, as opposed to the "technical fine" grade used for the Slurry 1 composition.

The calculated solids loading of each of Slurries 2-4 was 54.1% by weight. However, the actual (i.e., measured) solids loadings for Slurries 2-4 differed somewhat from the calculated solids loading, as set forth in Table I. The reasons for the variation between the calculated and actual solids loadings of Slurries 2-4 are thought to be due primarily to the solids content in the binder 22 and dispersant 24, as well as from measurement errors in weighing the various ingredients.

**TABLE I**

| Slurry Comp. | Water kg(lbs) | Binder kg(lbs) | Dispersant kg(lbs) | MoS₂ Powder kg(lbs) | Actual Solids (wt.%) |
|---|---|---|---|---|---|
| 1 | 10.7(23.5) | 0.5(1.1) | - | 14(31) | 55.93% |
| 2 | 45.4(100.1) | 7.3(16.0) | 1.2(2.6) | 63.5(140) | 54.48% |
| 3 | 58.4(128.8) | 9.3(20.6) | 1.5(3.3) | 81.6(180) | 56.28% |
| 4 | 25.6(56.5) | 4.1(9.1) | 0.7(1.5) | 35.8(79) | 58.23% |

The slurries 26 were then fed into the pulse combustion spray dryer 30 in the manner described herein to produce nine (9) different molybdenum disulfide spherical powder 10 batches or preparations, designated herein as the Trials 1-9 preparations. As indicated in Tables II and III, the Slurry 1 composition was used for Trial 1, whereas the Slurry 2 composition was used for Trials 2-4. Trials 5-7 used the Slurry 3 composition and Trials 8 and 9, the Slurry 4 composition.

The temperature of the pulsating stream of hot gases 50 was controlled to be within a range of about 491°C to about 599°C, as indicated in Tables II and III. The pulsating stream of hot gases 50 produced by the pulse combustion spray dryer 30 drove-off substantially all of the liquid 20, binder 22, and dispersant 24 (i.e., for Slurries 2-4) from the slurry 26, resulting in the formation of the spherical powder product 10. Various operating parameters for the pulse combustion spray dryer 30 for Trials 1-4 (produced from Slurry compositions 1 and 2) are set forth in Table II, whereas the operating parameters for Trials 5-9 (produced from Slurry compositions 3 and 4) are set forth in Table III:

**TABLE II**

| Slurry Composition | 1 | 2 | | |
|---|---|---|---|---|
| Trial No. | 1 | 2 | 3 | 4 |
| Nozzle | T_Open | T_Open | T_Open | T_Open |
| Venturi Size, mm (inches) | 35 (1.375) | 35 (1.375) | 35 (1.375) | 35 (1.375) |
| Venturi Position | 4 | 4 | 4 | 4 |
| Heat Release, kJ/hr (btu/hr) | 84,404 (80,000) | 84,404 (80,000) | 84,404 (80,000) | 84,404 (80,000) |
| Fuel Valve, (%) | 34.5 | 34.5 | 34.5 | 34.5 |
| Contact Temp., °C (°F) | 599 (1,110) | 593 (1,100) | 528 (983) | 526 (979) |
| Exit Temp., °C (°F) | 116 (240) | 116 (240) | 107 (225) | 116 (240) |
| Outside Temp., °C (°F) | 22 (72) | 23 (73) | 23 (74) | 24 (75) |
| Baghouse ΔP, mm H₂O (inches H₂O) | - | - | - | - |
| Turbo Air, MPa (psi) | 0.189 (27.5) | 0.089 (13.0) | 0.083 (12.0) | 0.083 (12.0) |
| RAV, (%) | 85 | - | - | - |
| Ex. Air Setpoint,(%) | 60 | 60 | 60 | 60 |
| Comb. Air Setpoint, (%) | 60 | 52 | 51 | 48 |
| Quench Air Setpoint, (%) | 49 | 47 | 47 | 47 |
| Trans. Air Setpoint, (%) | 5 | 5 | 5 | 5 |
| Feed Pump, (%) | 4.7 | 4.1 | 5.3 | 3.3 |
| Comb. Air Pressure, MPa (psi) | 0.010 (1.47) | 0.011 (1.58) | 0.011 (1.56) | 0.010 (1.46) |
| Quench Air Pressure, MPa (psi) | 0.008 (1.09) | 0.009 (1.37) | 0.009 (1.36) | 0.009 (1.34) |
| Combustor Can Pressure, MPa (psi) | 0.009 (1.36) | 0.009 (1.34) | 0.009 (1.37) | 0.008 (1.26) |

**TABLE III**

| Slurry Composition | 3 | | | 4 | |
|---|---|---|---|---|---|
| Trial No. | 5 | 6 | 7 | 8 | 9 |
| Nozzle | T_Open | T_Open | T_Open | T_Open | T_Open |
| Venturi Size, mm (inches) | 35 (1.375) | 35 (1.375) | 35 (1.375) | 38.1 (1.5) | 38.1 (1.5) |
| Venturi Position | 4 | 4 | 4 | Tapered | Tapered |
| Heat Release, kJ/hr (btu/hr) | 84,404 (80,000) | 84,404 (80,000) | 84,404 (80,000) | 84,404 (80,000) | 84,404 (80,000) |
| Fuel Valve, (%) | 34.6 | 34.6 | 34.5 | 34.5 | 34.5 |
| Contact Temp., °C (°F) | 511 (952) | 571 (1,060) | 549 (1,020) | 522 (972) | 491 (915) |
| Exit Temp., °C (°F) | 116 (240) | 118 (245) | 112 (233) | 116 (240) | 116 (240) |
| Outside Temp., 1C (°F) | 21 (70) | 23 (74) | 26 (78) | 29 (85) | 23 (74) |
| Baghouse ΔP, mm H₂O (inches H₂O) | 2.29 (0.09) | 1.78 (0.07) | 3.81 (0.15) | - | 0.25 (0.01) |
| Turbo Air, MPa (psi) | 0.089 (13.0) | 0.086 (12.5) | 0.086 (12.5) | 0.095 (13.8) | 0.094 (13.6) |
| RAV, (%) | - | - | - | - | - |
| Ex. Air Setpoint,(%) | 60 | 60 | 60 | 60 | 60 |
| Comb. Air Setpoint, (%) | 48 | 46 | 48 | 51 | 54 |
| Quench Air Setpoint, (%) | 46 | 46 | 46 | 47 | 48 |
| Trans. Air Setpoint, (%) | 5 | 5 | 5 | 5 | 5 |
| Feed Pump, (%) | 4.2 | 4.2 | 5.4 | 5.6 | 5.4 |
| Comb. Air Pressure, MPa (psi) | 0.010 (1.45) | 0.009 (1.35) | 0.010 (1.45) | 0.010 (1.45) | 0.011 (1.6) |
| Quench Air Pressure, MPa (psi) | 0.009 (1.33) | 0.009 (1.33) | 0.009 (1.35) | 0.009 (1.33) | 0.009 (1.34) |
| Combustor Can Pressure, MPa (psi) | 0.008 (1.25) | 0.008 (1.25) | 0.008 (1.25) | 0.008 (1.25) | 0.008 (1.26) |

The resulting molybdenum disulfide spherical powder products 10 produced by spray dry Trials 1-9 comprised generally spherically-shaped particles 14 that are themselves agglomerations of smaller sub-particles 16. However, and as was described earlier, the molybdenum disulfide spherical powder product 10 produced by Trial 1 (from Slurry 1), contained substantially fewer agglomerated particles 14 compared to the powder products produced by Trials 2-9. Moreover, those agglomerated particles 14 in the Trial 1 preparation were generally less spherical in nature compared to the powder preparations of Trials 2-9.

More specifically, and with reference now primarily to Figure 11, the powder product 10 produced by Trial 1 contained substantially fewer agglomerated particles 14 compared to the powder products made from dispersant-containing slurries 26 (i.e., Slurries 2-4) shown in Figures 1 and 7. Moreover, those agglomerated particles 14 that were produced by Trial 1 (i.e., from Slurry 1) were generally less spherical than those produced from slurries containing dispersant 24, again, as best seen by comparing the powder of Figure 11 (made from Slurry 1) with the powders of Figures 1 and 7 (made from slurries 26 containing a dispersant 24). The addition of a dispersant 24 to slurry 26 is clearly important in producing a powder product 10 having a high percentage of substantially spherical agglomerated particles 14.

Considering now primarily those powder products produced by Trials 2-9 (using dispersant-containing slurries 26) and with reference to Figures 1-4 and 7-10, the molybdenum disulfide spherical powder product 10 comprises a plurality of generally spherically-shaped particles 14 that are themselves agglomerations of smaller sub-particles 16, as best seen in Figures 1, 8, and 9. The smaller sub-particles 16 comprise flake-like or plate-like particles that are adhered together, so that the overall spherical particles 14 comprise a lamellar type structure that can be characterized in the alternative as "spheres made of flakes," as best seen in Figures 2 and 10. Moreover, many of the agglomerated spherical particles 14 comprising the molybdenum disulfide powder product 10 are substantially solid, i.e., non-hollow, as best seen in Figure 3, while others are shell-like or hollow in structure, as best seen in Figure 4.

The generally spherically-shaped agglomerated particles 14 also appear to have a thin film or coating thereon, as evidenced by the comparatively smooth, polished appearance of the particles 14, such as those particles 14 pictured in Figures 3, 4, 8, and 9. The thin film or coating on the particles 14 likely comprises residual amounts of binder 22, dispersant 24, or some combination thereof, that are brought to the surface of the particles 14 during the spray drying process.

As discussed above, a significant difference between the molybdenum disulfide spherical powder product 10 used in the present invention and conventional molybdenum disulfide powders relates to the flowability of the powder product 10. More specifically, the molybdenum disulfide spherical powder product 10 is generally quite flowable, whereas conventional molybdenum disulfide powders are not. For example, the powder product embodiments 10 produced by Trials 2-9 exhibited Hall flowabilities of less than about 105 s/50g of material. The powder product 10 produced by Trial 8 exhibited the greatest flowability of 73.8 s/50g, as set forth in Table IV.

The spherical powder product 10 produced by Trials 2-9 also indicate good densities for the powder product, densities that are generally comparable to conventional molybdenum disulfide powders of similar size. Moreover, the various exemplary powder products produced by Trials 2-9 exhibited highly uniform densities, with little variation among the various powder preparations. Scott, tap, and Hall densities (in g/cc) are presented in Table IV, as well as the moisture and sulfur content for the powders produced by the various trials.

**TABLE IV**

| Trial | Moisture (wt.%) | Sulfur (wt.%) | Scott Density (g/cc) | Tap Density (g/cc) | Hall Density (g/cc) | Hall Flow (s/50g) |
|---|---|---|---|---|---|---|
| 2 | 0.9 | 38.11 | 0.93 | 1.14 | 0.90 | 101.3 |
| 3 | 1.3 | 37.98 | 0.92 | 1.14 | 0.90 | 104.8 |
| 4 | 1.6 | 37.53 | 0.93 | 1.13 | 0.89 | 100.2 |
| 5 | 0.8 | 37.45 | 0.96 | 1.16 | 0.92 | 83.6 |
| 6 | 0.7 | 37.62 | 0.95 | 1.15 | 0.92 | 86.6 |
| 7 | 0.8 | 37.88 | 0.95 | 1.16 | 0.92 | 89.0 |
| 8 | 0.8 | 37.16 | 0.98 | 1.18 | 0.95 | 73.8 |
| 9 | 0.6 | 37.90 | 0.97 | 1.18 | 0.94 | 78.7 |

The molybdenum disulfide spherical powder product 10 produced in accordance with the teachings provided herein will comprise a wide range of sizes, and particles 14 having sizes ranging from about 1 µm to about 500 µm, such as, for example, sizes ranging from about 1 µm to about 100 µm, can be readily produced by the following the teachings provided herein. Sieve analyses of various "as-produced," i.e., green molybdenum disulfide spherical powder products 10 are provided in Tables V and VI.

**TABLE V**

| Trial | Sieve Analysis (US Mesh, wt.%) | | | |
|---|---|---|---|---|
| | +140 | -140/+170 | -170/+200 | -200/+230 |
| 2 | 4.8 | 5.5 | 13.5 | 15.0 |
| 3 | 6.9 | 6.4 | 14.6 | 15.2 |
| 4 | 4.7 | 5.2 | 12.8 | 14.7 |
| 5 | 10.3 | 7.4 | 14.1 | 13.7 |
| 6 | 8.8 | 7.5 | 14.7 | 14.0 |
| 7 | 9.9 | 7.3 | 14.3 | 14.3 |
| 8 | 21.3 | 10.0 | 16.1 | 14.7 |
| 9 | 15.2 | 9.1 | 16.5 | 16.0 |

**TABLE VI**

| Trial | Sieve Analysis (US Mesh, wt.%) | | | |
|---|---|---|---|---|
| | -230/+270 | -270/+325 | -325/+400 | -400 |
| 2 | 13.1 | 11.5 | 9.7 | 26.9 |
| 3 | 12.5 | 10.4 | 8.6 | 25.4 |
| 4 | 12.9 | 11.6 | 9.6 | 28.5 |
| 5 | 11.5 | 10.3 | 9.3 | 23.4 |
| 6 | 12.3 | 10.8 | 9.8 | 22.1 |
| 7 | 11.9 | 10.6 | 9.5 | 22.2 |
| 8 | 12.2 | 9.4 | 6.8 | 9.5 |
| 9 | 13.4 | 10.6 | 7.6 | 11.6 |

Additional physical characteristics of the molybdenum disulfide spherical powder products 10 produced by Trials 2-9 are presented in Table VII. More specifically, the exemplary powder samples produced by Trials 2-9 exhibited Fisher sizes or Fisher numbers (i.e., as measured by a Fisher Sub-Sieve Sizer or "FSSS") ranging from about 1.4 µm to about 2.0 µm, which are slightly larger than the specifications for the Climax "technical fine" grade of molybdenum disulfide, which is also presented in Table VII for comparison. Median particle size (i.e., the "D50" particle size) for the "as-produced" molybdenum disulfide spherical powder product 10 is about 50 µm, ranging from about 46 µm to about 61 um. The "D99" particle size of the as-produced spherical powder product is about 220 µm, ranging from about 177 µm to about 262 µm. Corresponding specifications for currently-available Climax "technical," "technical fine," and "superfine" grades of conventional molybdenum disulfide are also presented in Table VII for comparison purposes.

Also reported in Table VII are the so-called "acid insoluble" material content and "acid number" of the as-produced molybdenum disulfide spherical powder product 10. The acid insoluble content refers to the amount (usually expressed in weight percent) of acid-insoluble matter and iron in the material. Acid number refers to the amount (in mg) of potassium hydroxide (KOH) required to neutralize the acid in a one-gram sample of material. Both the acid insoluble content and acid number are commonly reported specifications for molybdenum disulfide powders. Again, corresponding specifications for currently-available Climax "technical," "technical fine," and "superfine" grades of conventional molybdenum disulfide are also presented in Table VII for comparison.

It is currently believed that the acid number for the powder samples may be artificially high due to the presence of residual amounts of binder 22 in the as-produced powder product, thus may not be directly comparable to the acid number of conventional molybdenum disulfide powders.

**TABLE VII**

| Trial | FSSS (µm) | D50 (µm) | D99 (µm) | Acid Insol. (wt.%) | Acid No. (mg KOH/g) |
|---|---|---|---|---|---|
| 2 | 1.4 | 52.95 | 201.6 | 0.24 | 3.24 |
| 3 | 1.4 | 48.30 | 177.1 | 0.23 | 3.87 |
| 4 | 1.5 | 46.35 | 178.5 | 0.32 | 4.21 |
| 5 | 1.6 | 54.28 | 261.7 | 0.26 | 3.93 |
| 6 | 1.6 | 52.50 | 221.8 | 0.23 | 3.69 |
| 7 | 1.8 | 51.71 | 217.2 | 0.25 | 4.54 |
| 8 | 1.9 | 61.48 | 256.2 | 0.24 | 3.55 |
| 9 | 2.0 | 60.89 | 248.9 | 0.26 | 3.64 |
| Climax Superfine | 0.4-0.45 | 0.9-1.6 | 7.0 | 0.50 | 3.00 |
| Climax Tech. Fine | 0.65-0.8 | 4.0-6.0 | 36.0 | 0.50 | 0.25 |
| Climax Tech. | 3.0-4.0 | 16.0-30.0 | 190 | 0.50 | 0.5 |

Additional powder assay results are presented in Table VIII. More specifically, Table VIII reports the molybdenum disulfide content (MoS₂) for the spherical powder product, which is about 95 weight percent. MoO₃, iron, and carbon contents are also reported, as are oils and water. For comparison purposes, corresponding specifications for currently-available Climax "technical," "technical fine," and "superfine" grades of conventional molybdenum disulfide are also presented in Table VIII.

**TABLE VIII**

| Trial | MoS₂ (wt.%) | MoO₃ (wt.%) | Iron (wt.%) | Carbon (wt.%) | Oil (wt.%) | H₂O (wt.%) |
|---|---|---|---|---|---|---|
| 2 | 94.79 | 0.078 | 0.08 | 2.95 | 1.163 | 0.661 |
| 3 | 94.71 | 0.071 | 0.08 | 2.88 | 1.246 | 0.750 |
| 4 | 94.72 | 0.071 | 0.08 | 2.99 | 1.144 | 0.638 |
| 5 | 95.13 | 0.064 | 0.08 | 2.79 | 1.086 | 0.554 |
| 6 | 95.10 | 0.063 | 0.08 | 2.88 | 1.147 | 0.463 |
| 7 | 95.07 | 0.071 | 0.07 | 2.86 | 1.189 | 0.461 |
| 8 | 95.39 | 0.059 | 0.08 | 2.78 | 0.973 | 0.446 |
| 9 | 95.28 | 0.051 | 0.08 | 2.77 | 1.103 | 0.427 |
| Climax Superfine | ∼98 | 0.15 | 0.25 | 1.50 | 0.40 | 0.15 |
| Climax Tech. Fine | ∼98 | 0.05 | 0.25 | 1.50 | 0.40 | 0.05 |
| Climax Tech. | ∼98 | 0.05 | 0.25 | 1.50 | 0.05 | 0.02 |

The molybdenum disulfide spherical powder product 10 may be used to advantage in a wide variety of friction materials and other similar compositions, either as a replacement for or in addition to solid lubricant materials (e.g., molybdenum disulfide, carbon graphite, tungsten disulfide, and boron nitride) commonly used in such materials. We believe that the novel structural features and characteristics of the molybdenum disulfide spherical powder product will provide such friction material compositions with improved performance with respect to certain performance parameters, including friction coefficient, noise generation, and wear. In addition, the thin surface films or coatings associated with some embodiments of the powder product 10 may reduce oxidization levels of the contained molybdenum disulfide, leading to improved stability of the friction material compositions. The high flowability of the spherical powder product 10 will allow for easier product handling during manufacture, particularly when compared to conventional molybdenum disulfide powders, and may also provide for the improved uniformity or dispersion of the molybdenum disulfide spherical powder product 10 throughout the bulk of the friction material composition itself.

Friction material compositions of the type suitable for improvement by the addition of the spherical molybdenum disulfide powder composition 10 described herein are commonly used for brake pads and linings, clutch facings, and the like. Most such friction material compositions are not composed of single elements or compounds, but rather are composites of many different types of materials that may be generally categorized as fillers/reinforcing fibers, abrasives, binder materials, and friction modifiers, although other categorizations are known and sometimes used.

While the exact compositions of such friction materials are usually proprietary to their respective manufacturers, thus are not known with certainty, the primary constituents are generally known. For example, commonly used filler materials/reinforcing fibers include, but are not limited to, organic fibers, inorganic fibers, metal fibers, lime (CaOH₂), potassium titanate, rubber (diene, nitrile), and zinc oxide. In the past, asbestos was perhaps the most commonly used filler/reinforcing material, although it is rarely used today. Abrasive materials include aluminum oxide, iron oxides, quartz, silica, and zirconium silicate. Binders include phenolic resins, modified resins, cresol, epoxy, cashew dust, PVB, rubber, linseed oil, and boron. Friction modifiers have included antimony trisulfide, brass, carbon graphite, copper, metal oxides (Fe₃O₄, ZnO, Cr₂O₃), metal sulfides (Cu₂S, Sb₂S₃, PbS, MoS₂, and ZnS), mineral fillers (mullite, kyanite, sillimanite, alumina, and crystalline silica), and petroleum coke.

Exemplary friction material compositions that may be made with the spherical molybdenum disulfide powder compositions 10 described herein may comprise an abrasive, a filler, a binder, and a friction modifier. The friction modifier may comprise the molybdenum disulfide spherical powder product 10 according to the teachings provided herein. The spherical molybdenum disulfide powder product 10 may be added in amounts ranging from about 0.1% by weight to about 10% by weight, preferably from about 0.5% by weight to about 8% by weight, and more preferably from about 1% by weight to about 5% by weight of the total friction material composition. Individual agglomerated particles of the spherical molybdenum disulfide powder product 10 may range in size from about 1 µm to about 500 µm, preferably from about 20 µm to about 200 µm, and more preferably from about 50 µm to about 100 µm.

The abrasive material may comprise any of a wide range of abrasive materials that are now known in the art or that may be developed in the future that are, or would be, suitable or desirable for the particular application. Exemplary abrasive materials include, but are not limited to, one or more of aluminum oxides, iron oxides, quartz, silica, and zirconium silicate. Abrasive materials may be added in conventional amounts depending on the particular formulation involved, the intended application, and the desired performance characteristics of the material. Generally speaking, abrasive materials may be added in amounts ranging from about 1% by weight to about 15% by weight of the friction material composition.

The filler/reinforcing fiber material may include one or more of the following: organic fibers, inorganic fibers, metal fibers, lime, potassium titanate, rubber (e.g., diene and nitrile), as well as zinc oxide. Fillers may be added in conventional amounts, again depending on the particular formulation involved, the intended application, and the desired performance characteristics of the material. By way of example, various embodiments of the present invention may comprise filler materials added in amounts ranging from about 10% by weight to about 50% by weight of the friction material composition.

The binder may include one or more of the following: phenolic resins and modified resins, cresol, epoxy, cashew dust, polyvinyl butyral (PVB), rubber, linseed oil, and boron. The binder material also may be added in conventional amounts depending on the particular formulation involved, the intended application, and the desired performance characteristics of the material. Various embodiments of the present invention may involve binders added in amounts ranging from about 5% by weight to about 25% by weight of the friction material composition.

As mentioned, the molybdenum disulfide spherical powder product 10 may be added as a friction modifier, although it may provide other functions as well. In addition, other friction modifiers may also be added to the composition, again depending on the particular application and desired characteristics. Friction modifiers suitable for use with the present invention include one or more of the following materials: antimony trisulfide, brass, carbon graphite, copper, metal oxides (e.g., Fe₃O₄, ZnO, Cr₂O₃, metal sulfides (e.g., Cu₂S, Sb₂S₃, PbS, and ZnS), mineral fillers (mullite, kyanite, sillimanite, alumina, and crystalline silica), as well as petroleum coke. Such other or additional friction modifiers may be added in amounts ranging from about 1% by weight to about 10% by weight of the overall friction material composition.

The molybdenum disulfide spherical powder product 10 may be provided in powder form and may be combined in varying amounts with the other desired constituents to produce the modified friction materials described herein. The other constituents of the friction material composition may be provided in forms commonly used for the fabrication of friction materials, as is known to persons having ordinary skill in the art.

The friction materials may thereafter be fabricated in accordance with well-known processes and techniques that are now known in the art or that may be developed in the future. Generally speaking, such processes involve the mixing of the various constituent ingredients to form a substantially homogeneous mixture. The substantially homogeneous mixture is then compacted or compressed to form a pre-formed article. The preformed article may then be further compacted or pressed at an elevated temperature (e.g., hot-pressing) to form the friction material composition. The resulting friction material composition thereafter may be further heat treated and/or machined in order to form the final friction material product. However, because the particular processes and techniques that may be used to fabricate friction materials having the spherical molybdenum disulfide powder additive 10 are well-known in the art and could be readily provided by persons having ordinary skill in the art after having become familiar with the teachings provided herein, the particular fabrication processes and techniques that may be used to form the exemplary friction materials will not be described in further detail herein.

In some embodiments it may be desirable or advantageous to provide spherical molybdenum disulfide powder product 10 having a thin film or coating thereon (e.g., comprising residual amounts of binder material 22) in order to reduce the tendency of the molybdenum disulfide powder product 10 to oxidize when incorporated into the friction material. It is expected that reduced oxidation levels of the spherical molybdenum disulfide powder product 10 will provide further advantages in terms of improved stability of the resulting friction materials.

## Claims

1. A friction material composition, comprising an abrasive, a filler, a binder, and a friction modifier, said friction modifier comprising a spherical molybdenum disulfide powder, said spherical molybdenum disulfide powder comprising flake-shaped molybdenum disulfide sub-particles that are agglomerated together to form individual, spherically-shaped particles, said spherical molybdenum disulfide powder comprising at least 90% by weight molybdenum disulfide.

2. The friction material composition of claim 1, wherein said spherical molybdenum disulfide powder is present in an amount ranging from 0.1% by weight to 10% by weight of said friction material composition.

3. The friction material composition of claim 1, wherein said spherical molybdenum disulfide powder is present in an amount ranging from 0.5% by weight to 8% by weight of said friction material composition.

4. The friction material composition of claim 1, wherein said spherical molybdenum disulfide powder is present in an amount ranging from 1% by weight to 5% by weight of said friction material composition.

5. The friction material composition of claim 1, wherein the individual, spherically shaped agglomerated particles have sizes in a range of from 1 µm to 500 µm.

6. The friction material composition of claim 1, wherein the individual, spherically shaped agglomerated particles have sizes in a range of from 20 µm to 200 µm.

7. The friction material composition of claim 1, wherein the individual, spherically shaped agglomerated particles have sizes in a range of from 50 µm to 100 µm.

8. The friction material composition of claim 1, wherein said abrasive is present in an amount ranging from 1% by weight to 15% by weight of said friction material composition, said abrasive including one or more of aluminum oxides, iron oxides, quartz, silica, and zirconium silicate.

9. The friction material composition of claim 1, wherein said filler is present in an amount ranging from 10% by weight to 50% by weight of said friction material composition, said filler including one or more of the following: organic fibers, inorganic fibers, metal fibers, lime, potassium titanate, rubber, and zinc oxide.

10. The friction material composition of claim 1, wherein said binder is present in an amount ranging from 5% by weight to 25% by weight of said friction material composition, said binder including one or more of the following: phenolic resins, modified resins, cresol, epoxy, cashew dust, polyvinyl butyral, rubber, linseed oil, and boron.

11. The friction material composition of claim 1 wherein said spherical molybdenum disulfide powder is evenly dispersed throughout the friction material composition, said spherical molybdenum disulfide powder comprising agglomerations of
flake-shaped sub-particles of molybdenum disulfide and at least 90% by weight molybdenum disulfide.

12. A method of making a friction material composition comprising:
providing respective supplies of an abrasive material, a filler material, and a binder material;
providing a supply of a spherical molybdenum disulfide powder, said spherical molybdenum disulfide powder comprising agglomerations of flake- shaped sub-particles of molybdenum disulfide and at least 90% by weight molybdenum disulfide; mixing together said abrasive material, said filler material, said binder material, and said spherical molybdenum disulfide powder to form a homogeneous mixture; compacting the homogeneous mixture to form a pre-formed article; and
hot-pressing the pre-formed article to form the friction material composition.

## Patentansprüche

1. Reibmaterialzusammensetzung, die ein Schleifmaterial, ein Füllmaterial, ein Bindematerial und einen Reibungsmodifizierer umfasst, wobei der Reibungsmodifizierer ein sphärisches Molybdändisulfidpulver umfasst, wobei das sphärische Molybdändisulfidpulver flockenförmige Molybdändisulfid-Subpartikel umfasst, die agglomeriert werden, um einzelne, kugelförmige Partikel auszubilden, wobei das sphärisches Molybdändisulfidpulver mindestens 90Gew.-% Molybdändisulfid umfasst.

2. Reibmaterialzusammensetzung nach Anspruch 1, wobei das sphärische Molybdändisulfidpulver in einer Menge zwischen 0,1Gew.-% und 10Gew.-% der Reibmaterialzusammensetzung vorliegt.

3. Reibmaterialzusammensetzung nach Anspruch 1, wobei das sphärische Molybdändisulfidpulver in einer Menge zwischen 0,5Gew.-% und 8Gew.-% der Reibmaterialzusammensetzung vorliegt.

4. Reibmaterialzusammensetzung nach Anspruch 1, wobei das sphärische Molybdändisulfidpulver in einer Menge zwischen 1Gew.-% und 5Gew.-% der Reibmaterialzusammensetzung vorliegt.

5. Reibmaterialzusammensetzung nach Anspruch 1, wobei die einzelnen, kugelförmigen agglomerierten Partikel Größen in einem Bereich von 1µm bis 500µm aufweisen.

6. Reibmaterialzusammensetzung nach Anspruch 1, wobei die einzelnen, kugelförmigen agglomerierten Partikel Größen in einem Bereich von 20µm bis 200µm aufweisen.

7. Reibmaterialzusammensetzung nach Anspruch 1, wobei die einzelnen, kugelförmigen agglomerierten Partikel Größen in einem Bereich von 50µm bis 100µm aufweisen.

8. Reibmaterialzusammensetzung nach Anspruch 1, wobei das Schleifmaterial in einer Menge zwischen 1Gew.-% und 15Gew.-% der Reibmaterialzusammensetzung vorliegt, wobei das Schleifmaterial einen oder mehrere aus Aluminiumoxiden, Eisenoxiden, Quartz, Silizium und Siliziumoxid und Zirkoniumsilikat enthält.

9. Reibmaterialzusammensetzung nach Anspruch 1, wobei das Füllmaterial in einer Menge zwischen 10Gew.-% und 50Gew.-% der Reibmaterialzusammensetzung vorliegt, wobei das Füllmaterial eins oder mehrere aus Folgendem enthält: organische Fasern, anorganische Fasern, Metallfasern, Kalk, Kaliumtitanat, Gummi und Zinkoxid.

10. Reibmaterialzusammensetzung nach Anspruch 1, wobei das Bindematerial in einer Menge zwischen 5Gew.-% und 25Gew.-% der Reibmaterialzusammensetzung vorliegt, wobei das Bindematerial eins oder mehrere aus Folgendem enthält: Phenolharz, modifizierte Harze, Kresol, Epoxid, Erdnussstaub, Polyvinlybutyral, Gummi, Leinöl und Bor.

11. Reibmaterialzusammensetzung nach Anspruch 1, wobei das sphärische Molybdändisulfidpulver gleichmäßig in der Reibmaterialzusammensetzung verteilt ist, wobei das sphärische Molybdändisulfidpulver Agglomerationen von flockenförmigen Subpartikeln von Molybdändisulfid und mindestens 90Gew.-% Molybdändisulfid umfasst.

12. Verfahren zum Herstellen einer Reibmaterialzusammensetzung, das Folgendes umfasst:
Bereitstellen von Schleifmaterial, eines Füllmaterials und eines Bindermaterials;
Bereitstellen von sphärischem Molybdändisulfidpulver, wobei das sphärische Molybdändisulfidpulver Agglomerationen von flockenförmigen Subpartikeln aus Molybdändisulfid und mindestens 90Gew.-% Molybdändislufid umfasst;
Vermischen von dem Schleifmaterial, Füllmaterial, Bindematerial und dem sphärischen Molybdändisulfidpulver, um ein homogenes Gemisch auszubilden;
Verdichten des homogenen Gemisches, um einen vorgefertigten Artikel auszubilden; und
Heißpressen des vorgefertigten Artikels, um die Reibmaterialzusammensetzung auszubilden.

## Revendications

1. Composition de matériau de frottement, comprenant un matériau abrasif, une charge, un liant et un modificateur de frottement, ledit modificateur de frottement comprenant une poudre de disulfure de molybdène sphérique, ladite poudre de disulfure de molybdène sphérique comprenant des particules secondaires de disulfure de molybdène en forme de flocons qui sont agglomérées ensemble pour former des particules individuelles, de forme sphérique, ladite poudre de disulfure de molybdène sphérique comprenant au moins 90 % en poids de disulfure de molybdène.

2. Composition de matériau de frottement selon la revendication 1, dans laquelle ladite poudre de disulfure de molybdène sphérique est présente en une quantité comprise entre 0,1 % en poids et 10 % en poids de ladite composition de matériau de frottement.

3. Composition de matériau de frottement selon la revendication 1, dans laquelle ladite poudre de disulfure de molybdène sphérique est présente en une quantité comprise entre 0,5 % en poids et 8 % en poids de ladite composition de matériau de frottement.

4. Composition de matériau de frottement selon la revendication 1, dans laquelle ladite poudre de disulfure de molybdène sphérique est présente en une quantité comprise entre 1 % en poids et 5 % en poids de ladite composition de matériau de frottement.

5. Composition de matériau de frottement selon la revendication 1, dans laquelle les particules agglomérées individuelles, de forme sphérique, ont des tailles comprises entre 1 µm et 500 µm.

6. Composition de matériau de frottement selon la revendication 1, dans laquelle les particules agglomérées individuelles, de forme sphérique, ont des tailles comprises entre 20 µm et 200 µm.

7. Composition de matériau de frottement selon la revendication 1, dans laquelle les particules agglomérées individuelles, de forme sphérique, ont des tailles comprises entre 50 µm et 100 µm.

8. Composition de matériau de frottement selon la revendication 1, dans laquelle ledit matériau abrasif est présent en une quantité comprise entre 1 % en poids et 15 % en poids de ladite composition de matériau de frottement, ledit matériau abrasif comprenant un ou plusieurs parmi des oxydes d'aluminium, des oxydes de fer, du quartz, de la silice et du silicate de zirconium.

9. Composition de matériau de frottement selon la revendication 1, dans laquelle ladite charge est présente en une quantité comprise entre 10 % en poids et 50 % en poids de ladite composition de matériau de frottement, ladite charge comprenant un ou plusieurs parmi les composés suivants : des fibres organiques, des fibres inorganiques, des fibres métalliques, de la chaux, du titanate de potassium, du caoutchouc et de l'oxyde de zinc.

10. Composition de matériau de frottement selon la revendication 1, dans laquelle ledit liant est présent en une quantité comprise entre 5 % en poids et 25 % en poids de ladite composition de matériau de frottement, ledit liant comprenant un ou plusieurs parmi les composés suivants :
des résines phénoliques, des résines modifiées, du crésol, de l'époxy, de la poudre d'anacardier, du butyral de polyvinyle, du caoutchouc, de l'huile de lin et du bore.

11. Composition de matériau de frottement selon la revendication 1, dans laquelle ladite poudre de disulfure de molybdène sphérique est dispersée uniformément à travers la composition de matériau de frottement, ladite poudre de disulfure de molybdène sphérique comprenant des agglomérats de particules secondaires en forme de flocons de disulfure de molybdène et au moins 90 % en poids de disulfure de molybdène.

12. Procédé de fabrication d'une composition de matériau de frottement consistant à :
fournir des provisions respectives d'un matériau abrasif, d'un matériau de remplissage et d'un matériau liant ;
fournir un approvisionnement d'une poudre de disulfure de molybdène sphérique, ladite poudre de disulfure de molybdène sphérique comprenant des agglomérats de particules secondaires en forme de flocons de disulfure de molybdène et au moins 90 % en poids de disulfure de molybdène ;
mélanger ensemble ledit matériau abrasif, ledit matériau de remplissage, ledit matériau liant et ladite poudre de disulfure de molybdène sphérique pour former un mélange homogène ;
compacter le mélange homogène pour former un article préformé ; et
presser à chaud l'article préformé pour former la composition de matériau de frottement.
